(19) Europäisches Patentamt
European Patent Office
Office européen des brevets

(11) Publication number: 0 232 996 B1

(12) # EUROPEAN PATENT SPECIFICATION

(45) Date of publication of patent specification: 03.01.90

(51) Int. Cl.[5]: A 01 N 35/02, A 01 N 35/04 // (A01N35/02, 35:02),(A01N35/04, 35:02)

(21) Application number: 87300538.3

(22) Date of filing: 22.01.87

(54) **Disinfecting and sterilizing compositions.**

(30) Priority: 23.01.86 US 821660

(43) Date of publication of application: 19.08.87 Bulletin 87/34

(45) Publication of the grant of the patent: 03.01.90 Bulletin 90/01

(84) Designated contracting states: AT BE CH DE ES FR GB IT LI LU NL SE

(56) References cited:
GB-A- 873 800
US-A- 4 048 336
US-A- 4 207 286

(73) Proprietor: SURGIKOS INC.
2500 Arbrook Boulevard
Arlington Texas 76010 (US)

(72) Inventor: Ascenzi, Joseph Michael
1908 Wimbledon Drive
Arlington Texas 76017 (US)
Inventor: Gordon, Michael David
919 Bucknell Drive
Arlington Texas 76012 (US)
Inventor: Bruckner, Norman Irving
3432 Brookshire Drive
Plano Texas 76075 (US)

(74) Representative: Jones, Alan John et al
CARPMAELS & RANSFORD 43 Bloomsbury Square
London, WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 232 996 B1

Jouve, 18, rue St-Denis, 75001 Paris, France

## Description

Field of the Invention

This invention relates to improved sterilizing and disinfecting compositions which contain glutaraldehyde and a water soluble conjugated monoaldehyde having from 4 to 10 carbon atoms. The monoaldehyde may be an α,β-unsaturated alkenal or an aromatic monoaldehyde. The present composition is particularly effective against Mycobacterium tuberculosis and closely related species at 20 °C.

Prior Art

Saturated dialdehyde sterilizing and disinfecting compositions are well known. Pepper et al., U.S. Patent 3 016 328 ; Stonehill, U.S. Patent 3 282 775 ; Boucher, U.S. Patent Nos. 3 708 263, 3 912 450, 3 968 248 and 3 968 250 ; and Buchalter, U.S. Patent No. 3 983 252 all disclose the use of glutaraldehyde in aqueous or alcoholic solutions used to disinfect or sterilize medical devices or environmental surfaces.

Winicov, U. S. Patents Nos. 4 048 336 and 4 093 744 teach sporicidal solutions which contain glutaraldehyde and a saturated monoaldehyde. Formaldehyde, acetaldehyde, propionaldehyde and butyraldehyde are specifically identified as useful monoaldehydes.

Jacobs, U.S. Patent No. 4 436 754 also discloses sterilizing and disinfecting solutions which contain glutaraldehyde and formaldehyde.

Schauenstein, Esterbauer and Zollner in Aldehydes in Biological Systems, Pion Limited, London 1977, pages 37-41, disclose that a range of α,β-unsaturated aldehydes have known antimicrobial properties.

Rein and Nolte in Zentralblatt fuer Bakteralogie, Parasitenkunde, Infektionskrankheitec und Hygiene., 1 Abt. Org. B 168, pp. 507-516 (1979) disclose that a range of aromatic monoaldehydes have antimicrobial properties.

Commercially available glutaraldehyde compositions of the type disclosed in the above mentioned U.S. Patents have long been considered to be effective against a broad range of microorganisms, including Mycobacterium tuberculosis and other closely related species. The compositions were considered to have the capability of killing Mycobacterium tuberculosis in ten (10) minutes at a temperature of 20 °C. The test employed to make the determination of effectiveness was the AOAC Tuberculocidal Test, as specified in Official Methods of Analysis of the Association of Official Analytical Chemists, 14th Edition, 1984, Sections 4.045-4.050. In this test, the organism employed is Mycobacterium bovis BCG.

It is now apparent that the standard AOAC test method gives highly erratic and variable results. This test method can show that a disinfectant composition is effective against Mycobacterium bovis BCG in 10 minutes, when in fact it is much less effective than the test indicated. An improved test method, which is both reproducible and quantitative, has been developed. The new test method uses the same test organism as the above mentioned AOAC Tuberculocidal Test. In this new test method, nine milliliters (ml) of the germicide to be tested is placed in a tube, put into a water bath and allowed to come to the desired temperature. One ml of the test organism (M. bovis BCG) is added to the tube containing the germicide to be tested. At appropriate time intervals, aliquots of the germicide-cell suspension are removed and added directly to an equal volume of appropriate neutralizer and mixed thoroughly. Ten-fold dilutions of the neutralized sample are prepared with saline dilution blanks. One ml of the appropriate dilutions are collected on the surface of membrane filters having a pore size of .45 micrometers. The filters are then washed with at least 50 ml of saline. The filters are placed on agar plates and incubated in plastic bags for 15 to 20 days at 37 °C. The surviving colonies are then counted. Survival curves are constructed to determine the tuberculocidal activity of the solution. The data is plotted as $S/S_0$ vs. time. $S_0$ is calculated by determining the viable count of the test organism culture and S by determining the viable count at each time point.

When commercial glutaraldehyde solutions are tested using the new quantitative test method, these compositions do not kill the required $1 \times 10^5$ Mycobacterium bovis BCG in 10 minutes at 20 °C. The additional exposure time required for complete kill at 20 °C may be as much as several hours. This exposure time becomes impractical, since the desired turn-around time for disinfection of equipment in the hospital is 30 minutes or less. In order to kill in 30 minutes a temperature of 25 °C is required, and in order to kill in 10 minutes a temperature of 30 °C is required. Since the normal hospital room temperatures are between 20 °C and 25 °C, additional costs associated with heating conventional glutaraldehyde compositions would be required to kill all the organisms within the desired 10 to 30 minute time frame.

Summary of the Invention

It has now been discovered that the addition of relatively small amounts of a conjugated monoaldehyde to the saturated dialdehyde composition provides a sterilizing and disinfecting solution

which gives much more rapid kill of Mycobacterium bovis BCG at 20 °C. The addition of the conjugated monoaldehyde does not diminish the capability of the composition to destroy other microorganisms including the very resistant bacterial spores.

Brief Description of the Drawing

Fig. 1 is a semi-log graph plotting the ratio of the number of surviving organisms over the number of original organisms versus time for various germicidal solutions at 20 °C.

Description of the Invention

The conjugated monoaldehydes, which can be used in the composition of the present invention, include the α,β-unsaturated alkenals having 4 to 10 carbon atoms and aromatic aldehydes having from 7 to 9 carbon atoms. The alkenals and aromatic aldehydes should have a solubility in water at 20 °C of 0.01 % or greater. The conjugated monoaldehydes which are useful in the present invention are

1) α,β-unsaturated alkenals having 4 to 10 carbon atoms of the formula :

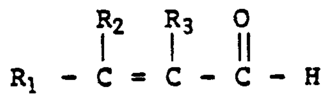

in which

$R_1$ is a hydrogen or a saturated or unsaturated hydrocarbon radical having 1 to 3 carbon atoms or is phenyl ; and

$R_2$ and $R_3$ are either H or $CH_3$.

The saturated or unsaturated hydrocarbon radical includes methyl, ethyl, ethenyl, ethynyl, propyl, propenyl and propynyl radicals.

2) benzaldehyde

3) substituted benzaldehydes of the formula :

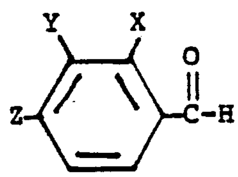

where X and Y are H, OH or halogen, and Z is H, OH, $CH_3$, $OCH_3$, halogen and $NO_2$, and where Y and Z together may be O—$CH_2$—O and where OH groups are not on adjacent carbon atoms.

The following α,β-unsaturated alkenals are typical of those useful in the present invention (the name in parenthesis is the common name for the compound) :

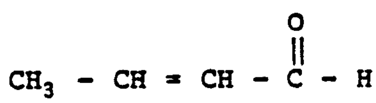

2-butenal (crotonaldehyde)

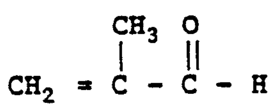

2-methyl-2-propenal (methacrolein)

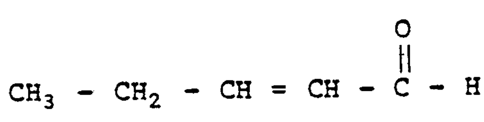

2-pentenal

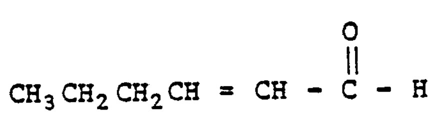

2-hexenal

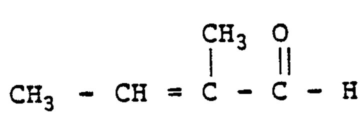

2-methyl-2-butenal (tiglic aldehyde)

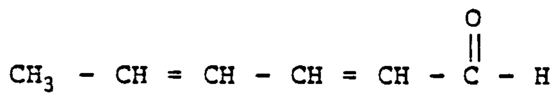

2,4-hexadienal

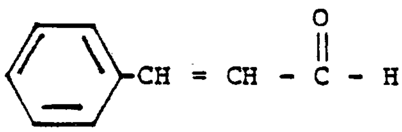

3-phenyl-2-propenal
(cinnamaldehyde)

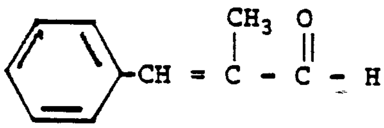

2-methyl-3-phenyl-2-propenal (α-methyl-cinnamaldehyde)

Acrolein or 2-propenal, which is the simplest α,β-unsaturated monoaldehyde, will also function to enhance the kill of Mycobacterium bovis BCG. However, the toxicity of acrolein is too great for it to be used in compositions of the type to which the present invention is directed.

The preferred α,β-unsaturated alkenals are 2-hexenal and 3-phenyl-2-propenal (cinnamaldehyde) and 2-methyl-3-phenyl-2-propenal (α-methyl-cinnamaldehyde). These compounds, when added in small amounts to a glutaraldehyde solution, provide excellent tuberculocidal activity enhancement and have relatively low toxicity humans.

Benzaldehyde and substituted benzaldehydes which are typical of the compounds useful in the compositions of the present invention are the following :

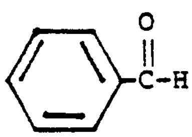

Benzaldehyde

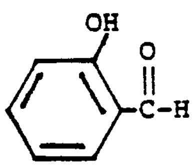

2-Hydroxybenzaldehyde
(salicylaldehyde)

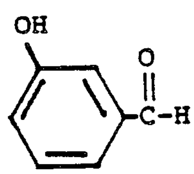

3-Hydroxybenzaldehyde

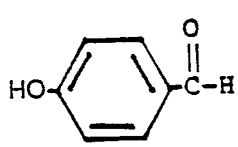

4-Hydroxybenzaldehyde

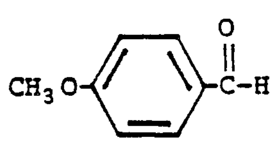

4-Methoxybenzaldehyde
(para-anisaldehyde)

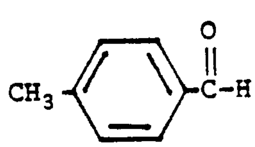

4-Methylbenzaldehyde
(para-Tolualdehyde)

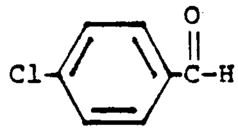

4-Chlorobenzaldehyde

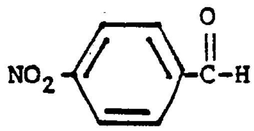

4-Nitrobenzaldehyde

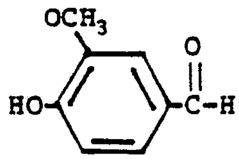

4-Hydroxy-3-methoxybenzaldehyde (vanillin)

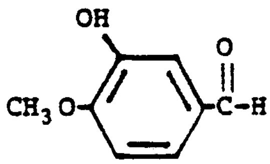

3-Hydroxy-4-methoxybenzaldehyde (isovanillin)

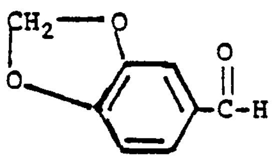

3,4-Dioxymethylenebenzaldehyde (piperonal)

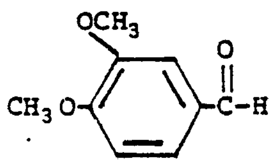

3,4-Dimethoxybenzaldehyde (veratraldehyde)

The preferred compounds in this group are benzaldehyde, 4-methoxybenzaldehyde, and 3,4-dioxymethylenebenzaldehyde.

The particular substitutents or their position on benzaldehyde do not appear to affect the efficacy of the substituted benzaldehyde with one exception. If OH groups are on adjacent carbon atoms, an acetal is formed with glutaraldehyde which inactivates glutaraldehyde or other saturated dialdehydes.

The compositions of the present invention contain a saturated dialdehyde having 2 to 6 carbon atoms as the major antimicrobial in the compositions. The saturated dialdehydes which are known to have sporicidal activity are malonaldehyde, succinaldehyde, glutaraldehyde, adipaldehyde and oxalaldehyde. The preferred dialdehyde is glutaraldehyde.

The concentration of glutaraldehyde in the composition is generally between 0.3 and 6 % by weight at the dilution or concentration when the composition is used. Higher concentrations of glutaraldehyde, i. e., 10-30 % may be used for shipping the composition to the point of use and the composition would then be diluted to the desired use concentration. The preferred concentration of glutaraldehyde at use is between 1 % and 4 %.

The conjugated monoaldehyde is present in the composition, at use concentration, in amounts of between 0.01 % and 0.6 % by weight. The limits on the amount of the conjugated monoaldehyde used in the present composition is a function of the solubility of the particular monoaldehyde in water. It is possible to increase the concentration of a particular monoaldehyde in the solution by dissolving the monoaldehyde in a co-solvent, miscible with water, and adding the dissolved monoaldehyde to water. Suitable co-solvents include methanol, ethanol, isopropanol, tetrahydrofuran, dimethylsulfoxide and dioxane.

An alkalinating salt is used in the composition as a buffer to maintain the proper pH of the composition during use. The alkalinating salt may be the type disclosed in the Pepper et al., U.S. Patent No. 3 016 328, which is an alkali metal carbonate or bicarbonate, e. g., sodium bicarbonate or potassium

bicarbonate, or may be a phosphate. The buffer may also be an organic carboxylate salt such as sodium citrate, sodium acetate, potassium citrate or potassium acetate. The particular salt or mixtures of salts are present in a sufficient amount, 0.6 % to 2.5 % based on the total weight of the solution, to give the desired pH. The pH of the composition, to obtain the optimum antimicrobial activity at room temperature, is between pH 7.0 and 9.0. However, the tuberculocidal activity enhancement provided by the conjugated monoaldehyde is not dependent on pH.

The composition may contain other ingredients such as a surfactant, an odor suppressant, a corrosion inhibitor, a stabilizer for the aldehyde to inhibit polymerization, an antioxidant and a dye or fragrance. The use of these other ingredients is well-known in the art.

The compositions of the present invention may be formulated in two or more parts which are combined immediately prior to use. The formulation of the composition into multiple parts extends the shelf life of the composition. The dialdehydes are more effective against bacterial spores at an alkaline pH. However, the dialdehydes also have a tendency to autopolymerize at an alkaline pH, thereby reducing the effective concentration of the dialdehyde in the composition. The dialdehyde can be formulated in an aqueous solution at an acid pH, and activated with an alkalinating agent immediately prior to use, shifting the pH to the alkaline range. This procedure is disclosed in the previously mentioned Pepper et al., U.S. Patent No. 3 016 328.

In the following Examples, all percentages are weight percentages, based on the total weight of the solutions unless otherwise indicated. The bacteriological testing was by the new tuberculocidal test methodology previously described.

## Example I

In this Example, equimolar amounts of a number of saturated and conjugated monoaldehydes were added to a 2 % aqueous glutaraldehyde solution and tested to show the effectiveness of the compositions in killing Mycobacterium bovis BCG at 20 °C. All of the solutions were buffered with 0.6 % dipotassium hydrogen phosphate. The pH of the test solutions were adjusted to 8.0 with IN $H_3PO_4$. The pH of the solution containing formaldehyde was 8.6. The results of these tests are shown in Table I.

Table I

| Monoaldehyde | % Monoaldehyde (W/W) | Number of Organisms Surviving | |
|---|---|---|---|
| | | 0 min. | 10 min. |
| None | ---- | $5.9 \times 10^5$ | $2.2 \times 10^3$ |
| HCHO | 0.10 | $9.6 \times 10^5$ | $6.4 \times 10^2$ |
| $CH_3CHO$ | 0.15 | $5.4 \times 10^5$ | $1.3 \times 10^3$ |
| $CH_3CH_2CHO$ | 0.19 | $3.8 \times 10^5$ | $1.0 \times 10^3$ |
| $CH_3CH_2CH_2CHO$ | 0.24 | $3.8 \times 10^5$ | $5.6 \times 10^2$ |
| $CH_3CH{=}CHCHO$ | 0.23 | $7.5 \times 10^5$ | $4.0 \times 10^1$ |
| $CH_3CH_2CH_2CH{=}CHCHO$ | 0.33 | $7.5 \times 10^5$ | 0 |
| 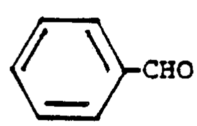 | 0.35 | $3.2 \times 10^5$ | 0 |

The results indicate that conjugated monoaldehydes provide better tuberculocidal activity enhancement than saturated monoaldehydes at 20 °C.

## Example II

In this Example, the saturated and conjugated monoaldehydes were tested in aqueous solutions which did not contain glutaraldehyde to determine the effect of similar concentrations of monoaldehydes, as in Example I, against the same organism at 20 °C. The solutions were buffered and the pH was adjusted as in Example I. The pH of the formaldehyde solution was 7.5. The results are shown in Table II.

Table II

| Monoaldehyde | % Monoaldehyde (W/W) | Number of Organisms Surviving | |
|---|---|---|---|
| | | 0 min. | 10 min. |
| HCHO | 0.40 | $4.8 \times 10^5$ | $6.7 \times 10^5$ |
| $CH_3CHO$ | 0.15 | $3.8 \times 10^5$ | $3.8 \times 10^5$ |
| $CH_3CH_2CH_2CHO$ | 0.24 | $3.8 \times 10^5$ | $3.3 \times 10^5$ |
| $CH_3CH{=}CHCHO$ | 0.23 | $7.5 \times 10^5$ | $4.2 \times 10^4$ |
| $CH_3CH_2CH_2CH{=}CHCHO$ | 0.33 | $7.5 \times 10^5$ | $8.6 \times 10^4$ |
| 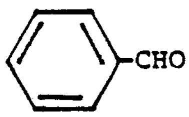 | 0.30 | $2.2 \times 10^6$ | $4.6 \times 10^5$ |

The results show that low concentrations of saturated or conjugated monoaldehydes do not have any appreciable tuberculocidal activity by themselves.

Example III

A number of different α,β-unsaturated monoaldehydes were added to 2 % aqueous glutaraldehyde solution and tested to show their effectiveness in killing Mycobacterium bovis BCG at 20 °C. The solutions were buffered and the pH was adjusted as in Example I. The results are shown in Table III.

Table III

| Monoaldehyde (% w/w) | Number of Organisms Surviving | | | |
|---|---|---|---|---|
| | 0 min. | 10 min. | 20 min. | 30 min. |
| None | $4.4x10^5$ | $4.6x10^4$ | $1.0x10^4$ | $2.4x10^3$ |
| 2-methyl-2-propenal (0.23) | $4.4x10^5$ | $4.2x10^3$ | $2.6x10^1$ | 0 |
| 2-butenal (0.23) | $7.3x10^5$ | $3.2x10^3$ | $4.0x10^0$ | 0 |
| 2-methyl-2-butenal (0.28) | $4.4x10^5$ | $1.8x10^4$ | $2.2x10^3$ | $2.5x10^2$ |
| 3-methyl-2-butenal (0.28) | $4.4x10^5$ | $1.4x10^4$ | $1.8x10^2$ | $1.6x10^1$ |
| 2-pentenal (0.28) | $3.8x10^5$ | $4.3x10^3$ | $6.0x10^0$ | 0 |
| 2-hexenal (0.33) | $4.5x10^5$ | 0 | 0 | 0 |
| 3-phenyl-2-propenal (0.10) | $8.6x10^5$ | $4.2x10^1$ | 0 | 0 |
| 2,4-hexadienal (0.32) | $5.8x10^5$ | $3.6x10^2$ | 0 | 0 |
| 2-methyl-3-phenyl-2-propenal (0.11) | $6.8x10^5$ | 0 | 0 | 0 |

The results show the enhanced tuberculocidal activity with the addition of small amounts of α,β-unsaturated monoaldehydes.

## Example IV

Benzaldehyde and a number of monosubstituted benzaldehydes were added to a 2 % aqueous glutaraldehyde solution and the resulting solutions were tested to determine their effectiveness in killing Mycobacterium bovis BCG at 20 °C. All of the solutions were buffered to a pH of 8 as in Example I. The results are shown in Table IV.

Table IV

| Monoaldehyde (% w/w) | Number of Organisms Surviving | | | |
|---|---|---|---|---|
| | 0 min. | 10 min. | 20 min. | 30 min. |
| None | $4.5x10^5$ | $1.4x10^4$ | $3.7x10^3$ | $9.0x10^2$ |
| Benzaldehyde (0.30) | $4.7x10^5$ | 0 | 0 | 0 |
| 2-Hydroxybenz-aldehyde (0.41) | $4.5x10^5$ | $7.0x10^1$ | 0 | 0 |
| 3-Hydroxybenz-aldehyde (0.41) | $4.5x10^5$ | $5.6x10^2$ | 0 | 0 |
| 4-Hydroxybenz-aldehyde (0.41) | $5.9x10^5$ | $7.9x10^3$ | $1.1x10^2$ | 0 |
| 4-Methoxybenz-aldehyde (0.45) | $4.5x10^5$ | $2.8x10^1$ | 0 | 0 |
| 4-Methylbenz-aldehyde (0.18) | $4.5x10^5$ | --- | 0 | 0 |
| 2-Chlorobenz-aldehyde (0.12) | $5.3x10^5$ | 0 | 0 | 0 |
| 4-Chlorobenz-aldehyde (0.06) | $4.5x10^5$ | $2.0x10^1$ | 0 | 0 |
| 4-Nitrobenz-aldehyde (0.06) | $4.5x10^5$ | $4.1x10^3$ | $6.2x10^1$ | 0 |

The results show that benzaldehyde and a variety of monosubstituted benzaldehydes enhanced tuberculocidal activity of glutaraldehyde solutions.

## Example V

A number of disubstituted benzaldehydes were added to a 2 % aqueous glutaraldehyde solution and the resulting solutions were tested to determine their effectiveness in killing Mycobacterium bovis BCG at 20 °C. All of the solutions were buffered at a pH of 8 as in Example I. The results are shown in Table V.

Table V

| Monoaldehyde (% w/w) | Number of Organisms Surviving | | | |
|---|---|---|---|---|
| | 0 min. | 10 min. | 20 min. | 30 min. |
| None | $4.5x10^5$ | $1.0x10^4$ | $3.0x10^3$ | $2.0x10^2$ |
| 3,4-Dihydroxybenz-aldehyde (0.46) | $4.5x10^5$ | $1.4x10^4$ | $6.6x10^3$ | $8.6x10^2$ |
| 4-Hydroxy-3-Methoxy-benzaldehyde (0.51) | $5.9x10^5$ | $5.0x10^3$ | $4.3x10^2$ | $4.0x10^0$ |

Table V (Continued)

| Monoaldehyde (% w/w) | Number of Organisms Surviving | | | |
|---|---|---|---|---|
| | 0 min. | 10 min. | 20 min. | 30 min. |
| 3-Hydroxy-4-Methoxy-benzaldehyde (0.20) | $4.5x10^5$ | $1.0x10^4$ | $4.0x10^2$ | $6.0x10^0$ |
| 3,4-Dioxymethylene-benzaldehyde (0.30) | $4.5x10^5$ | $6.8x10^2$ | 0 | 0 |
| 3,4-Dimethoxybenz-aldehyde (0.55) | $4.5x10^5$ | $5.8x10^3$ | $1.5x10^2$ | $2.0x10^0$ |

The results show the effect of disubstituted benzaldehydes in enhancing tuberculocidal activity. The 3,4-dihydroxybenzaldehyde shows no enhancement.

Example VI

An aqueous solution containing 2 % glutaraldehyde and 0.3 % benzaldehyde was prepared. Portions of the solution were adjusted to different pH levels with $H_3PO_4$ or KOH. All solutions contained 0.6 % dipotassium hydrogen phosphate. The solutions were tested against Mycobacterium bovis BCG organisms at 20 °C to determine the effect of pH on the effectiveness of the solutions. The results are shown in Table VI.

Table VI

| pH | Number of Organisms Surviving | | | |
|---|---|---|---|---|
| | 0 min. | 5 min. | 10 min. | 15 min. |
| 3 | $1.2x10^6$ | $5.6x10^3$ | 0 | 0 |
| 5 | $1.2x10^6$ | $6.0x10^3$ | $6.0x10^0$ | 0 |
| 7 | $1.2x10^6$ | $1.5x10^3$ | 0 | 0 |
| 8 | $4.7x10^5$ | $2.6x10^2$ | 0 | 0 |
| 9 | $1.2x10^6$ | $9.2x10^2$ | 0 | 0 |

The results show that the tuberculocidal enhancement effect is not pH dependent.

Example VII

A series of solutions containing 2 % glutaraldehyde and various concentrations of benzaldehyde were prepared. The solutions were buffered to a pH of 8 as in Example I and tested for their effectiveness in killing Mycobacterium bovis BCG at 20 °C. The results are shown in Table VII.

Table VII

| Benzaldehyde (% w/w) | Number of Organisms Surviving | | | |
|---|---|---|---|---|
| | 0 min. | 10 min. | 20 min. | 30 min. |
| 0.30 | $4.7x10^5$ | 0 | 0 | 0 |
| 0.15 | $4.7x10^5$ | 0 | 0 | 0 |
| 0.05 | $4.7x10^5$ | $1.4x10^3$ | 0 | 0 |

Table VII (Continued)

| Benzaldehyde (% w/w) | Number of Organisms Surviving | | | |
|---|---|---|---|---|
| | 0 min. | 10 min. | 20 min. | 30 min. |
| 0.03 | $8.4x10^5$ | $1.8x10^4$ | $8.8x10^1$ | $2.0x10^0$ |
| 0.02 | $8.4x10^5$ | $9.0x10^2$ | $1.7x10^2$ | 0 |
| 0.01 | $8.4x10^5$ | $1.2x10^3$ | $2.6x10^2$ | $2.0x10^0$ |
| 0.0075 | $4.9x10^5$ | $1.1x10^4$ | $6.6x10^2$ | $1.2x10^2$ |
| 0.0050 | $4.9x10^5$ | $8.4x10^3$ | $7.0x10^2$ | $3.6x10^1$ |
| 0 | $4.9x10^5$ | $1.7x10^4$ | $2.8x10^3$ | $5.2x10^2$ |

The results show that a minimum concentration of about 0.01 % of the monoaldehyde provides enhancement of tuberculocidal activity.

Example VIII

A series of solutions containing 0.3 % benzaldehyde and various concentrations of glutaraldehyde were prepared. The solutions were buffered to a pH of 8 as in Example 1 and tested for their effectiveness in killing Mycobacterium bovis BCG at 20 °C. The results are shown in Table VIII.

Table VIII

| Glutaraldehyde (% w/w) | Number of Organisms Surviving | | | |
|---|---|---|---|---|
| | 0 min. | 10 min. | 20 min. | 30 min. |
| 2.0 | $4.7x10^5$ | 0 | 0 | 0 |
| 1.0 | $4.7x10^5$ | $8.0x10^1$ | 0 | 0 |
| 0.5 | $4.7x10^5$ | $4.4x10^3$ | 0 | 0. |
| 0.3 | $8.4x10^5$ | $2.0x10^4$ | $2.8x10^3$ | 0 |
| 0.2 | $8.4x10^5$ | $5.8x10^4$ | $1.0x10^4$ | $2.7x10^3$ |
| 0.1 | $8.4x10^5$ | $3.6x10^4$ | $2.2x10^4$ | $2.9x10^4$ |

The results show that in the presence of small amounts of a monoaldehyde minimum concentration of glutaraldehyde of about 0.3 % is necessary to obtain kill of the organism within 30 minutes.

Example IX

Solutions containing 2 % and 3 % glutaraldehyde were prepared with no addition of a conjugated monoaldehyde. The solutions were buffered to a pH of 8 as in Example I and tested for their effectiveness in killing Mycobacterium bovis BCG at 20 °C. The results are shown in Table IX.

Table IX

| Glutaraldehyde (% W/W) | Number of Organisms Surviving | | | |
|---|---|---|---|---|
| | 0 min. | 30 min. | 60 min. | 90 min. |
| 2 | $1.2x10^6$ | $1.2x10^3$ | $3.6x10^1$ | $1.2x10^1$ |
| 3 | $1.2x10^6$ | $1.2x10^2$ | $1.2x10^1$ | 0 |

The results show that merely increasing the concentration of glutaraldehyde in the solution will not significantly enhance the kill of the organism.

Fig. 1 graphically illustrates the tuberculocidal enhancement provided by the addition of small amounts of a conjugated monoaldehyde to glutaraldehyde solutions. The organism tested was

Mycobacterium bovis BCG. The curves shown in Fig. 1 are plots of $S/S_0$ versus time for the following solutions (all solutions were tested at 20 °C and at pH 8) :

| Curve | Active Ingredients |
|---|---|
| A | 2 % glutaraldehyde |
| B | 3 % glutaraldehyde |
| C | 2 % glutaraldehyde and 0.3 % benzaldehyde |
| D | 2 % glutaraldehyde and 0.3 % 3,4-dioxymethylenebenzaldehyde |
| E | 2 % glutaraldehyde and 0.10 % 3-phenyl-2-propenal |

As indicated in Fig. 1, the presence of the conjugated monoaldehyde in the solution results in a significant reduction in the time required for total kill of the organism.

## Claims

1. A sterilizing and disinfecting solution containing from 0.3 % to 6 % by weight of glutaraldehyde and from 0.01 % to 0.6 % by weight of a conjugated monoaldehyde having a solubility of at least 0.01 % in water at 20 °C and selected from the group consisting of :

a) alkenals having 4 to 10 carbon atoms of the formula :

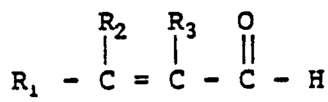

in which

$R_1$ is a hydrogen or saturated or unsaturated hydrocarbon radical having 1 to 3 carbon atoms or is phenyl, and

$R_2$ and $R_3$ are either H or $CH_3$ ;

b) benzaldehyde ; and

c) substituted benzaldehydes of the formula :

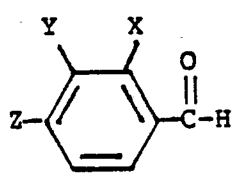

where X and Y are H, OH, or halogen, and Z is H, OH, $CH_3$, $OCH_3$, halogen or $NO_2$ and where Y and Z together may be $O—CH_2—O$ and where OH groups are not on adjacent carbon atoms.

2. The composition of Claim 1 in which the glutaraldehyde concentration is between 1 and 4 % by weight.

3. The composition of Claim 1 in which the monoaldehyde is benzaldehyde.

4. The composition of Claim 1 in which the monoaldehyde is 2-hexenal.

5. The composition of Claim 1 in which the monoaldehyde is 3-phenyl-2-propenal.

6. The composition of Claim 1 in which the monoaldehyde is 2-methyl-3-phenyl-2-propenal.

7. The composition of Claim 1 in which the monoaldehyde is 4-methoxybenzaldehyde.

8. The composition of Claim 1 in which the monoaldehyde is 3,4-dioxymethylenebenzaldehyde.

## Patentansprüche

1. Sterilisierende und desinfizierende Lösung mit einem Gehalt an 0,3 bis 6 Gew.-% Glutaraldehyd und an 0,01 bis 0,6 Gew.-% eines konjugierten Monoaldehyds mit einer Löslichkeit von wenigstens 0,01 % in Wasser bei 20 °C, ausgewählt aus der Gruppe bestehend aus :

a) Alkenalen mit 4 bis 10 Kohlenstoffatomen mit der Formel :

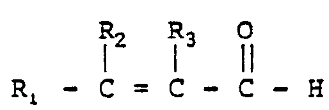

worin

$R_1$ Wasserstoff oder einen gesättigten oder ungesättigten Kohlenwasser-stoffrest mit 1 bis 3 Kohlenstoffatomen bedeutet oder Phenyl ist, und

$R_2$ und $R_3$ entweder Wasserstoff oder $CH_3$ bedeuten ;
b) Benzaldehyd ; und
c) substituierten Benzaldehyden mit der Formel :

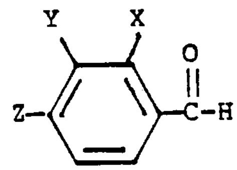

worin X und Y für Wasserstoff, OH oder Halogen stehen und Z für Wasserstoff, OH, $CH_3$, $OCH_3$, Halogen oder $NO_2$ steht und worin Y und Z zusammen die Gruppe $O—CH_2—O$ bedeuten können und worin OH-Gruppen nicht an benachbarten Kohlenstoffatomen vorliegen.

2. Zusammensetzung nach Anspruch 1, worin die Glutaraldehydkonzentration zwischen 1 und 4 Gew.-% beträgt.

3. Zusammensetzung nach Anspruch 1, worin der Monoaldehyd Benzaldehyd ist.

4. Zusammensetzung nach Anspruch 1, worin der Monoaldehyd 2-Hexenal ist.

5. Zusammensetzung nach Anspruch 1, worin der Monoaldehyd 3-Phenyl-2-propenal ist.

6. Zusammensetzung nach Anspruch 1, worin der Monoaldehyd 2-Methyl-3-phenyl-2-propenal ist.

7. Zusammensetzung nach Anspruch 1, worin der Monoaldehyd 4-Methoxybenzaldehyd ist.

8. Zusammensetzung nach Anspruch 1, worin der Monoaldehyd 3,4-Dioxymethylenbenzaldehyd ist.

## Revendications

1. Solution stérilisante et désinfectante contenant de 0,3 à 6 % en poids de glutaraldéhyde et de 0,01 à 0,6 % en poids d'un monoaldéhyde conjugué dont la solubilité dans l'eau à 20 °C est d'au moins 0,01 % et qui est choisi parmi :

a) les alcénals de 4 à 10 atomes de carbone de formule :

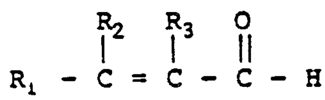

dans laquelle

$R_1$ est un atome d'hydrogène ou un radical hydrocarboné saturé ou insaturé de 1 à 3 atomes de carbone ou le phényle, et

$R_2$ et $R_3$ sont chacun H ou $CH_3$ ;
b) le benzaldéhyde ; et
c) des benzaldéhydes substitués de formule :

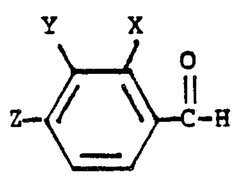

dans laquelle X et Y sont chacun H, OH ou halogène, et Z est H, OH, $CH_3$, $OCH_3$, halogène ou $NO_2$ et dans laquelle Y et Z peuvent former conjointement le groupe $O—CH_2—O$ et dans laquelle les groupes OH ne sont pas sur des atomes de carbone adjacents.

2. Composition selon la revendication 1, dans laquelle la concentration de glutaraldéhyde est de 1 à 4 % en poids.

3. Composition selon la revendication 1, dans laquelle le monoaldéhyde est le benzaldéhyde.

4. Composition selon la revendication 1, dans laquelle le monoaldéhyde est le 2-hexénal.

5. Composition selon la revendication 1, dans laquelle le monoaldéhyde est le 3-phényl-2-propénal.

6. Composition selon la revendication 1, dans laquelle le monoaldéhyde est le 2-méthyl-3-phényl-2-propénal.

7. Composition selon la revendication 1, dans laquelle le monoaldéhyde est le 4-méthoxy-benzaldéhyde.

8. Composition selon la revendication 1, dans laquelle le monoaldéhyde est le 3,4-dioxyméthylène-benzaldéhyde.

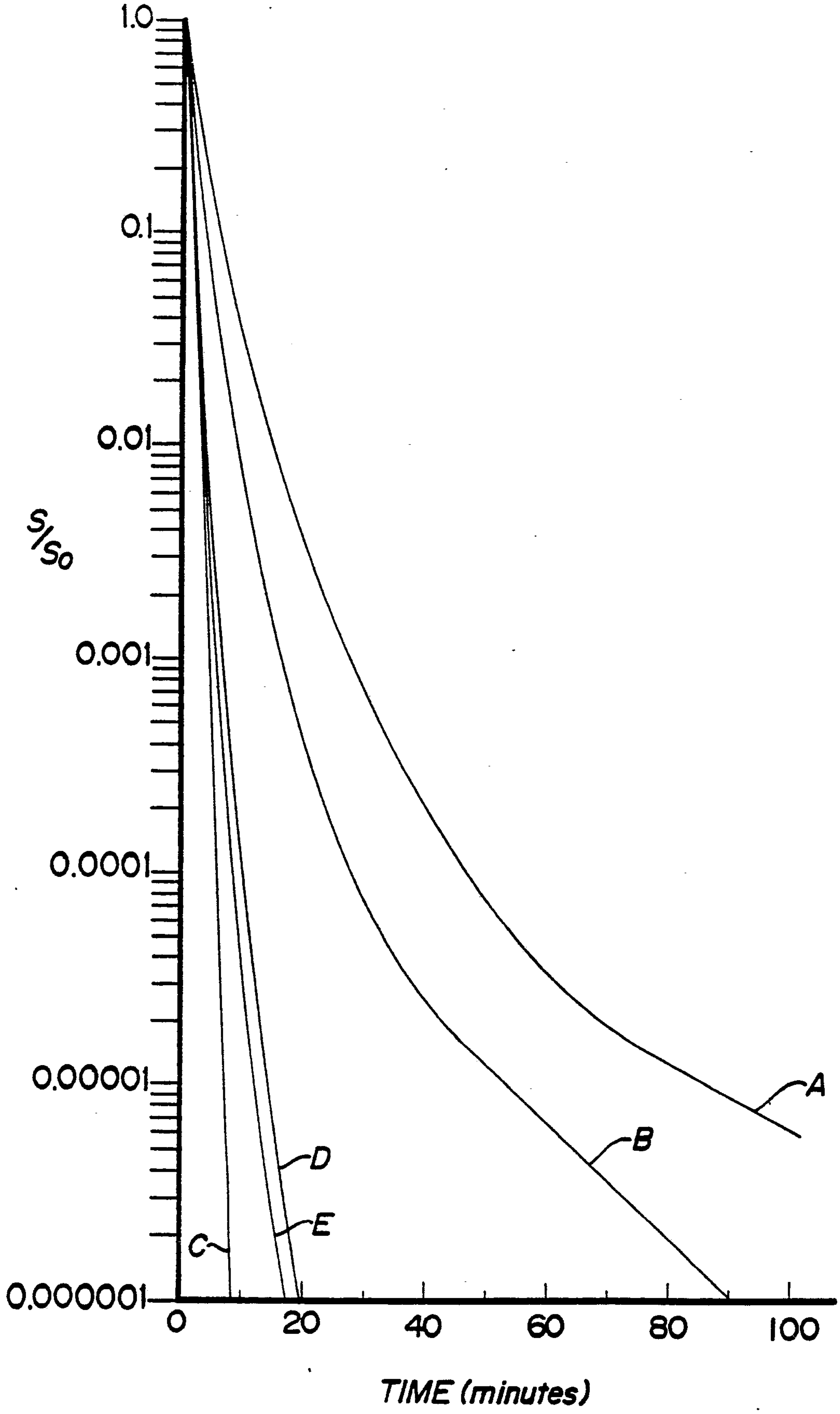
1.0
0.1
0.01
0.001
0.0001
0.00001
0.000001
S/So
0
20
40
60
80
100
TIME (minutes)
A
B
C
D
E